# EUROPEAN PATENT APPLICATION

(11) **EP 3 185 482 A1**
(43) Date of publication of application: **28.06.2017**
(21) Application number: 15834067.9
(22) Date of filing: 23.03.2015
(51) Int. Cl.: H04L 12/28

(54) **INTELLIGENT HOME CONTROLLER AND COMMUNICATION METHOD THEREOF**

(30) Priority: 20.08.2014 CN 201410413456
(71) Applicant: Huizhou TCL Mobile Communication Co., Ltd., Huizhou, Guangdong 516006 (CN)
(72) Inventor: HU, Xuelong Ronald, Huizhou Guangdong 516006 (CN); GUO, George, Huizhou Guangdong 516006 (CN); ZHAO, Shiqing, Huizhou Guangdong 516006 (CN); HU, Xin, Huizhou Guangdong 516006 (CN); XU, Dawang, Huizhou Guangdong 516006 (CN)
(74) Representative: Brachmann, Roland W.
(86) International application number: PCT/CN2015/074864
(87) International publication number: WO 2016/026295

(57) **Abstract**

Disclosed are a communication method of an intelligent home controller, the method comprising the following steps: the intelligent home controller establishes a network connection with a household appliance (S101); the intelligent home controller receives a data packet transmitted by the household appliance (S102); the intelligent home controller determines, according to a protocol identifier, the protocol type of a communication protocol supported by the household appliance (S103); and the intelligent home controller selects, according to a determination result, a protocol parsing program corresponding to the protocol type of the communication protocol from a plurality of protocol parsing programs, and utilizes the protocol parsing program to parse the data packet, thus realizing data transmission with the household appliance (S104). The present invention realizes data transmission between the intelligent home controller and a plurality of household appliances.

## Description

### Field of the Invention

The present invention relates to the field of communication technologies, and specifically to a communication method for a smart home controller and a smart home controller that applies the method.

### Description of the Related Art

Along with the development of Internet and wireless communications, the development of smart home systems has become increasingly great, wherein household appliances that a smart home system involves are smart products that people can have frequent contact with. Through local memory, local processing and local control, smart home controllers and household appliances form a smart family cloud (i.e. a cloud server), and the smart family cloud is a relatively independent local network.

However, there is no industrial standard for smart family clouds regarding control communication protocols. Many manufacturers have developed their own communication protocols when producing their respective household appliances, such that smart home controllers can only perform data transmission with household appliances of the same brand. For example, a smart home controller can only perform data transmission with refrigerators and washing machines of the brand 1, and cannot perform data transmission with air conditioners of the brand 2.

In summary, there is a need to provide a communication method for a smart home controller and a smart home controller that applies the method so as to solve the above problems.

### Summary of the Invention

The technical problem that the present invention primarily solves is to provide a communication method for a smart home controller and a smart home controller that applies the method, which can realize data transmission between the smart home controller and a plurality of household appliances, and effectively improve the user experience.

To solve the above technical problem, one technical solution employed by the present invention is as follows: providing a communication method for a smart home controller, comprising: a smart home controller acquires at least one communication protocol supported by household appliances; the smart home controller determines at least one protocol type of the communication protocols supported by household appliances; the smart home controller saves a protocol analysis program of the communication protocols corresponding to the at least one protocol type in a parallel way, such that the smart home controller can be compatible with a variety of communication protocols supported by a plurality of household appliances; the smart home controller establishes a network connection with household appliances; the smart home controller receives a data packet sent by a household appliance, wherein the data packet comprises a protocol identifier of the communication protocol supported by household appliance; the smart home controller determines the protocol type of the communication protocol supported by the household appliance through the protocol identifier; the smart home controller selects, based on the determination result, a protocol analysis program corresponding to the protocol type of the communication protocol from a plurality of protocol analysis programs, and uses the protocol analysis program to analyze the data packet, thereby achieving data transmission with the household appliance; wherein, the smart home controller routinely detects if the cloud server comprises a new communication protocol supported by the household appliance; if it does, the smart home controller downloads and installs a new version of the application that comprises the new communication protocol, such that the smart home controller can be compatible with a variety of communication protocols supported by a plurality of household appliances.
wherein, the data packet further comprises a protocol format of the communication protocol supported by household appliance and the data byte size of the data packet.
wherein, the, "smart home controller determines the protocol type of the communication protocol supported by the household appliance through the protocol identifier," comprises: the smart home controller searches the protocol identifier of the communication protocol supported by the household appliance from the data packet; the smart home controller analyzes the protocol identifier of the communication protocol supported by the household appliance; the smart home controller determines the protocol type of the communication protocol supported by the household appliance according to the analysis result.
wherein, the, "smart home controller selects, based on the determination result, a protocol analysis program corresponding to the protocol type of the communication protocol from a plurality of protocol analysis programs, and uses the protocol analysis program to analyze the data packet," comprises: the smart home controller determines if it supports the protocol type of the communication protocol supported by the household appliance; if it does not, the smart home controller acquires relevant information about the communication protocol supported by the household appliance, wherein the relevant information about the communication protocol comprises protocol format or protocol identifier; the smart home controller sends the relevant information to a cloud server such that the cloud server acquires the communication protocol supported by the household appliance and forms a new version of the application; the smart home controller downloads from the cloud server and installs the new version of the application that comprises the communication protocol supported by the household appliance; the smart home controller selects a protocol analysis program corresponding to the protocol type of the communication protocol from a plurality of protocol analysis programs of the new version of the application, and uses the protocol analysis program to analyze the data packet.

To solve the above technical problem, another technical solution employed by the present invention is as follows: providing a communication method for a smart home controller, comprising: the smart home controller establishes a network connection with household appliances; the smart home controller receives a data packet sent by a household appliance, wherein the data packet comprises a protocol identifier of the communication protocol supported by household appliance; the smart home controller determines the protocol type of the communication protocol supported by the household appliance through the protocol identifier; the smart home controller selects, based on the determination result, a protocol analysis program corresponding to the protocol type of the communication protocol from a plurality of protocol analysis programs, and uses the protocol analysis program to analyze the data packet, thereby achieving data transmission with the household appliance.
wherein, the method further comprises: the smart home controller routinely detects if the cloud server comprises a new communication protocol supported by the household appliance; if it does, the smart home controller downloads and installs a new version of the application that comprises the new communication protocol, such that the smart home controller can be compatible with a variety of communication protocols supported by a plurality of household appliances.
wherein, prior to that the smart home controller establishes a network connection with household appliances, the method further comprises: the smart home controller acquires at least one communication protocol supported by household appliances; the smart home controller determines at least one protocol type of the communication protocols supported by household appliances; the smart home controller saves a protocol analysis program of the communication protocols corresponding to the at least one protocol type in a parallel way, such that the smart home controller can be compatible with a variety of communication protocols supported by a plurality of household appliances.
wherein, the "smart home controller determines the protocol type of the communication protocol supported by the household appliance through the protocol identifier" comprises: the smart home controller searches the protocol identifier of the communication protocol supported by the household appliance from the data packet; the smart home controller analyzes the protocol identifier of the communication protocol supported by the household appliance; the smart home controller determines the protocol type of the communication protocol supported by the household appliance according to the analysis result.
wherein, the "smart home controller selects, based on the determination result, a protocol analysis program corresponding to the protocol type of the communication protocol from a plurality of protocol analysis programs, and uses the protocol analysis program to analyze the data packet" comprises: the smart home controller determines if it supports the protocol type of the communication protocol supported by the household appliance; if it does not, the smart home controller acquires relevant information about the communication protocol supported by the household appliance, wherein the relevant information about the communication protocol comprises protocol format or protocol identifier; the smart home controller sends the relevant information to a cloud server such that the cloud server acquires the communication protocol supported by the household appliance and forms a new version of the application; the smart home controller downloads from the cloud server and installs the new version of the application that comprises the communication protocol supported by the household appliance; the smart home controller selects a protocol analysis program corresponding to the protocol type of the communication protocol from a plurality of protocol analysis programs of the new version of the application, and uses the protocol analysis program to analyze the data packet.

To solve the above technical problem, another technical solution employed by the present invention is as follows: providing a smart home controller, comprising: a network connection module configured to establish a network connection with household appliances; a data receiving module connected with the network connection module and configured to receive a data packet sent by a household appliance, wherein the data packet comprises a protocol identifier of the communication protocol supported by household appliance; a protocol type determination module connected with the data receiving module and configured to determine the protocol type of the communication protocol supported by the household appliance through the protocol identifier; a data analysis module connected with the protocol type determination module and configured to select, based on the determination result, a protocol analysis program corresponding to the protocol type of the communication protocol from a plurality of protocol analysis programs, and use the protocol analysis program to analyze the data packet, thereby achieving data transmission with the household appliance.
wherein, the smart home controller further comprises a protocol updating module, the protocol updating module being configured to routinely detect if the cloud server comprises a new communication protocol supported by the household appliance, and if it is detected that the cloud server comprises a new communication protocol supported by the household appliance, the data analysis module downloads and installs a new version of the application that comprises the new communication protocol, such that the smart home controller can be compatible with a variety of communication protocols supported by a plurality of household appliances.
wherein, the smart home controller further comprises a protocol acquiring module, wherein the protocol acquiring module is configured to acquire at least one communication protocol supported by household appliances; the protocol type determination module is connected with the protocol acquiring module, and configured to determine at least one protocol type of the communication protocols supported by household appliances; the data analysis module is configured to save a protocol analysis program of the communication protocols corresponding to the at least one protocol type in a parallel way, such that the smart home controller can be compatible with a variety of communication protocols supported by a plurality of household appliances.
wherein, the protocol type determination module comprises: a searching unit configured to search the protocol identifier of the communication protocol supported by the household appliance from the data packet; an analysis unit connected with the searching unit and configured to analyze the protocol identifier of the communication protocol supported by the household appliance; a protocol determination unit connected with the analysis unit and configured to determine the protocol type of the communication protocol supported by the household appliance according to the analysis result.
wherein, the data analysis module comprises: a protocol support unit configured to determine if it supports the protocol type of the communication protocol supported by the household appliance; a protocol information acquiring unit connected with the protocol support unit and configured to acquire relevant information about the communication protocol supported by the household appliance if the protocol support unit determines that it does not support the protocol type of the communication protocol supported by the household appliance, wherein the relevant information about the communication protocol comprises protocol format or protocol identifier; a sending unit connected with the protocol information acquiring unit and configured to send the relevant information to a cloud server such that the cloud server acquires the communication protocol supported by the household appliance and forms a new version of the application; a receiving unit configured to download from the cloud server and install the new version of the application that comprises the communication protocol supported by the household appliance; an analysis unit connected with the receiving unit and configured to select a protocol analysis program corresponding to the protocol type of the communication protocol from a plurality of protocol analysis programs of the new version of the application, and use the protocol analysis program to analyze the data packet.

The advantageous effects of the present invention are as follows: unlike the prior art, the communication method for a smart home controller according to the present invention establishes a network connection with household appliances through a smart home controller; the smart home controller receives a data packet sent by a household appliance; the smart home controller determines the protocol type of the communication protocol supported by the household appliance through the protocol identifier; the smart home controller selects, based on the determination result, a protocol analysis program corresponding to the protocol type of the communication protocol from a plurality of protocol analysis programs, and uses the protocol analysis program to analyze the data packet. By determining the protocol type of the communication protocol supported by a household appliance, selecting a protocol analysis program corresponding to the protocol type of the communication protocol based on the protocol type, and performing protocol analysis on a data packet of the household appliance, the present invention can achieve data transmission between the smart home controller and household appliances, and effectively improve the user experience.

### Brief Description of the Drawings

- Fig. 1: is a flow chart of a first example of the communication method for a smart home controller according to the present invention;
- Fig.2: is a flow chart of substeps of the step S103 in Fig.1;
- Fig.3: is a flow chart of substeps of the step S104 in Fig.1;
- Fig.4: is a flow chart of a second example of the communication method for a smart home controller according to the present invention;
- Fig.5: illustrates the structure of the smart home controller according to the present invention;
- Fig.6: illustrates the structure of the protocol type determination module in Fig.5;

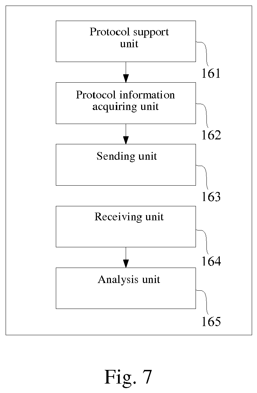

- Fig.7: illustrates the structure of the data analysis module in Fig.5.

### Detailed Description of the Specific Embodiments

The present invention will be described in detail below with reference to the accompanying drawings and examples.

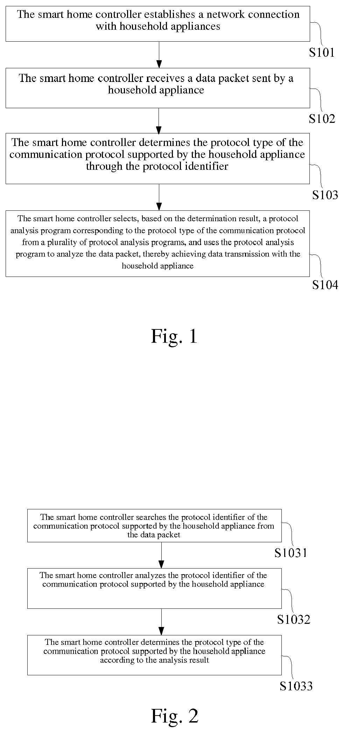

As shown in Fig.1 Fig.1 is a flow chart of a first example of the communication method for a smart home controller according to the present invention. The method comprises the following steps:
Step S101: the smart home controller establishes a network connection with household appliances.

Wherein, the smart home controller may establish a network connection with a plurality of household appliances such that the smart home controller can achieve unified control and management. The household appliances may be either products from different manufacturers or products from the same manufacturer. It should be understood that the household appliances may be vacuum machines, refrigerators, washing machines, air conditioners or TVs. Furthermore, the household appliances may be replaced by smart homes, such as door access, telephones, smart curtains, smart sofas or smart beds.

Step S102: the smart home controller receives a data packet sent by a household appliance.
wherein the data packet comprises protocol identifier and protocol format of the communication protocol supported by household appliance, data byte size of the data packet, etc.

Step S103: the smart home controller determines the protocol type of the communication protocol supported by the household appliance through the protocol identifier.

In the preferred example of the present invention, the smart home controller determines the protocol type of the communication protocol supported by the household appliance through the protocol identifier. It should be understood that, in an alternative example of the present invention, the protocol type of the communication protocol supported by the household appliance may also be determined through the protocol format or other keywords.
wherein, as shown in Fig.2, Fig.2 is a flow chart of substeps of the step S103 in Fig.1, and the substeps of the step S103 comprises:
Step S1031: the smart home controller searches the protocol identifier of the communication protocol supported by the household appliance from the data packet. It should be understood that protocol identifiers are different for communication protocols supported by household appliances from different manufacturers. Therefore, the smart home controller would search the protocol identifier of the communication protocol supported by the household appliance from the data packet for each connection with the household appliance.
Step S1032: the smart home controller analyzes the protocol identifier of the communication protocol supported by the household appliance.
Step S1033: the smart home controller determines the protocol type of the communication protocol supported by the household appliance according to the analysis result. It should be understood that the smart home controller can identify the protocol type of the communication protocol supported by the household appliance according to the protocol identifier, and the smart home controller can further identify the type, manufacturer, model, serial number and ID number of the household appliance according to other information carried by the data packet.
Step S104: the smart home controller selects, based on the determination result, a protocol analysis program corresponding to the protocol type of the communication protocol from a plurality of protocol analysis programs, and uses the protocol analysis program to analyze the data packet.

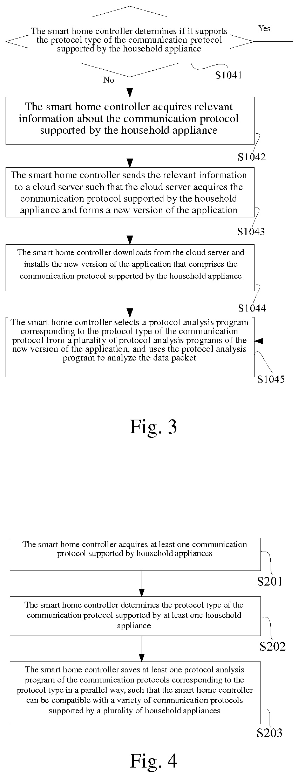

Specifically, the protocol type may be UpnP or AllJoyn. When it is determined that the protocol type of the communication protocol supported by the household appliance is UpnP, a protocol analysis program corresponding to UpnP is selected from a plurality of protocol analysis programs, and the protocol analysis program corresponding to UpnP is used to analyze the data packet; when it is determined that the protocol type of the communication protocol supported by the household appliance is AllJoyn, a protocol analysis program corresponding to AllJoyn is selected from a plurality of protocol analysis programs, and the protocol analysis program corresponding to AllJoyn is used to analyze the data packet. When the analysis is completed, moreover, it enters the application layer of the smart home controller, and performs data transmission on the application layer of the smart home controller, comprising data receiving, processing, control and storage. At the same time, the application layer of the smart home controller may be connected via Internet, thereby achieving data transmission with the household appliance.
wherein, as shown in Fig.3, Fig.3 is a flow chart of substeps of the step S104 in Fig.1, and the substeps of the step S104 comprises:
Step S1041: the smart home controller determines if it supports the protocol type of the communication protocol supported by the household appliance.

If the smart home controller determines that it does not support the protocol type of the communication protocol supported by the household appliance, it indicates that the household appliance is a new household appliance, and go to Step S1042: the smart home controller acquires relevant information about the communication protocol supported by the household appliance, wherein the relevant information about the communication protocol comprises protocol format or protocol identifier.

Step S1043: the smart home controller sends the relevant information to a cloud server such that the cloud server acquires the communication protocol supported by the household appliance and forms a new version of the application.

Step S1044: the smart home controller downloads from the cloud server and installs the new version of the application that comprises the communication protocol supported by the household appliance.

Step S1045: the smart home controller selects a protocol analysis program corresponding to the protocol type of the communication protocol from a plurality of protocol analysis programs of the new version of the application, and uses the protocol analysis program to analyze the data packet. It should be understood that, after the smart home controller has downloaded and installed the new version of the application, the smart home controller has now saved the protocol analysis program of the communication protocol supported by the household appliance.

In the Step S1041, if the smart home controller determines that it supports the protocol type of the communication protocol supported by the household appliance, go to Step S1045.

After Step S1045, the smart home controller would label the new household appliance or household appliance of an unsupported protocol type, or memorize the protocol attributes of the new household appliance or household appliance of an unsupported protocol type. As a result, when the smart home controller needs to perform data transmission with the new household appliance or household appliance of an unsupported protocol type next time, the smart home controller does not need to execute Step S1041 again. Instead, by directly determining the label of the new household appliance or household appliance of an unsupported protocol type, or determining the protocol attributes of the new household appliance or household appliance of an unsupported protocol type, it can directly select a protocol analysis program corresponding to the communication protocol from a plurality of protocol analysis programs to analyze the data packet from the new household appliance or household appliance of an unsupported protocol type, thereby saving the time for determining the protocol. It should be understood that the protocol attributes may be the type, manufacturer, model, serial number and ID number of the new household appliance. For example, after Step S1045, the smart home controller labels the new household appliance with A1, and when the smart home controller performs data transmission with a new household appliance again, the smart home controller determines that the label of the new household appliance is A1, then the smart home controller directly selects a protocol analysis program corresponding to A1 from a plurality of protocol analysis programs to analyze the data packet from the new household appliance. Alternatively, the smart home controller determines the protocol attributes of the new household appliance, for example, when the smart home controller determines at least one of the type, manufacturer, model, serial number and ID number of the new household appliance, the smart home controller directly selects a protocol analysis program corresponding to the protocol attribute from a plurality of protocol analysis programs to analyze the data packet of the new household appliance. Namely, as long as any one or more of the type, manufacturer, model, serial number and ID number of the new household appliance is determined, a corresponding protocol analysis program can be selected to analyze the data packet of the new household appliance.

In the present example, the smart home controller adds protocol analysis programs of communication protocols corresponding to various protocol types preferably in a building block way, namely prior to the Step S101, the smart home controller saves protocol analysis programs of communication protocols supported by a plurality of household appliances preferably in a parallel way such that the smart home controller can be compatible with communication protocols supported by a plurality of household appliances. As shown in Fig.4, Fig.4 is a flow chart of a second example of the communication method for a smart home controller according to the present invention. The method comprises the following steps:
Step S201: the smart home controller acquires at least one communication protocol supported by household appliances, wherein protocol analysis programs corresponding to communication protocols supported by a plurality of household appliances, such as UpnP or AllJoyn, may be acquired through downloading.
Step S202: the smart home controller determines at least one protocol type of the communication protocols supported by household appliances, wherein the Step S202 of the present example is the same as the Step S103 of the example above.
Step S203: the smart home controller saves a protocol analysis program of the communication protocols corresponding to the at least one protocol type in a parallel way, such that the smart home controller can be compatible with a variety of communication protocols supported by a plurality of household appliances.

In the present example, after the smart home controller saves protocol analysis programs of communication protocols corresponding to a plurality of protocol types in a parallel way, the smart home controller routinely detects if the cloud server comprises a new communication protocol supported by the household appliance. If it detects that the cloud server does not comprise a new communication protocol supported by the household appliance, the smart home controller maintains the original version of the application; if it detects that the cloud server comprises a new communication protocol supported by the household appliance, the smart home controller downloads and installs a new version of the application that comprises the new communication protocol, such that the smart home controller can be compatible with a variety of communication protocols supported by a plurality of household appliances or more communication protocols supported by household appliances to be developed in the future.

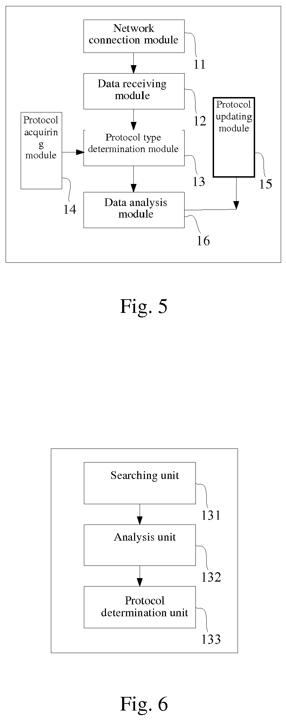

As shown in Fig.5, Fig.5 illustrates the structure of the smart home controller according to the present invention, and the smart home controller in Fig.5 corresponds to the smart home controller in Fig.1. The smart home controller comprises a network connection module 11, a data receiving module 12, a protocol type determination module 13, a protocol acquiring module 14, a protocol updating module 15 and a data analysis module 16.

The network connection module 11 is configured to establish a network connection with household appliances (not shown). It should be understood that the household appliances may be vacuum machines, refrigerators, washing machines, air conditioners or TVs. Furthermore, the household appliances may be replaced by smart homes, such as door access, telephones, smart curtains, smart sofas or smart beds.

The data receiving module 12 is connected with the network connection module 11 and configured to receive a data packet sent by a household appliance, wherein the data packet comprises protocol identifier and protocol format of the communication protocol supported by household appliance, data byte size of the data packet, etc.

The protocol acquiring module 14 is configured to acquire at least one communication protocol supported by household appliances.

The protocol type determination module 13 is connected with the data receiving module 12 and the protocol acquiring module 14, respectively, and configured to, after acquiring the data packet received by the data receiving module 12 and acquiring the protocol identifier, determine the protocol type of the communication protocol supported by the household appliance through the protocol identifier, and configured to determine at least one protocol type of the communication protocols supported by the household appliances when the protocol acquiring module 14 acquires at least one communication protocol supported by household appliances.

In the preferred example of the present invention, the protocol type determination module 13 determines the protocol type of the communication protocol supported by the household appliance through the protocol identifier. It should be understood that, in an alternative example of the present invention, the protocol type determination module 13 may also determine the protocol type of the communication protocol supported by the household appliance through the protocol format or other keywords.
wherein, the protocol type determination module 13 comprises: a searching unit 131, an analysis unit 132 and a protocol determination unit 133. The searching unit 131 is configured to search the protocol identifier of the communication protocol supported by the household appliance from the data packet. The analysis unit 132 is connected with the searching unit 131 and configured to analyze the protocol identifier of the communication protocol supported by the household appliance. The protocol determination unit 133 is connected with the analysis unit 132 and configured to determine the protocol type of the communication protocol supported by the household appliance according to the analysis result.

The protocol updating module 15 is configured to routinely detect if the cloud server (not shown) comprises a new communication protocol supported by the household appliance.

The data analysis module 16 is connected with the protocol type determination module 13 and the protocol updating module 15, respectively. The data analysis module 16 is configured to select, based on the determination result, a protocol analysis program corresponding to the protocol type of the communication protocol from a plurality of protocol analysis programs, and use the protocol analysis program to analyze the data packet, thereby achieving data transmission with the household appliance, wherein the determination result is a result that the protocol type determination module 13 determines the protocol identifier of the data packet sent by the household appliance received by the data receiving module 12.

The data analysis module 16 is further configured to, after the protocol type determination module 13 determines at least one protocol type of the communication protocols supported by the household appliances acquired by the protocol acquiring module 14, save a protocol analysis program of the communication protocols corresponding to the at least one protocol type in a parallel way, such that the smart home controller can be compatible with a variety of communication protocols supported by a plurality of household appliances.

The data analysis module 16 is further configured to, when the protocol updating module 15 detects that the cloud server comprises a new communication protocol supported by the household appliance, download and install a new version of the application that comprises the new communication protocol, such that the smart home controller can be compatible with a variety of communication protocols supported by a plurality of household appliances. The data analysis module 16 is further configured to, when the protocol updating module 15 detects that the cloud server does not comprise a new communication protocol supported by the household appliance, maintain the original version of the application.

Wherein, the data analysis module 16 comprises a protocol support unit 161, a protocol information acquiring unit 162, a sending unit 163, a receiving unit 164 and an analysis unit 165. The protocol support unit 161 is configured to determine if it supports the protocol type of the communication protocol supported by the household appliance. The protocol information acquiring unit 162 is connected with the protocol support unit 161 and configured to acquire relevant information about the communication protocol supported by the household appliance if the protocol support unit 161 determines that it does not support the protocol type of the communication protocol supported by the household appliance, wherein the relevant information about the communication protocol comprises protocol format or protocol identifier. The sending unit 163 is connected with the protocol information acquiring unit 162 and configured to send the relevant information to a cloud server such that the cloud server acquires the communication protocol supported by the household appliance and forms a new version of the application. The receiving unit 164 is configured to download from the cloud server and install the new version of the application that comprises the communication protocol supported by the household appliance. The analysis unit 165 is connected with the receiving unit 164 and configured to select a protocol analysis program corresponding to the protocol type of the communication protocol from a plurality of protocol analysis programs of the new version of the application, and use the protocol analysis program to analyze the data packet.

In the present example, the data analysis module 16 would label the new household appliance or household appliance of an unsupported protocol type, or memorize the protocol attributes of the new household appliance or household appliance of an unsupported protocol type. As a result, when the smart home controller needs to perform data transmission with the new household appliance or household appliance of an unsupported protocol type next time, the smart home controller does not need to execute the determination of the communication protocol supported by the household appliance again. Instead, by directly determining the label of the new household appliance or household appliance of an unsupported protocol type, or determining the protocol attributes of the new household appliance or household appliance of an unsupported protocol type via the protocol type determination module 13, the data analysis module 16 can directly select a protocol analysis program corresponding to the communication protocol from a plurality of protocol analysis programs to analyze the data packet from the new household appliance or household appliance of an unsupported protocol type, thereby saving the time for determining the protocol. It should be understood that the protocol attributes may be the type, manufacturer, model, serial number and ID number of the new household appliance. For example, the smart home controller labels the new household appliance with A1, and when the smart home controller performs data transmission with a new household appliance again, the protocol type determination module 13 determines that the label of the new household appliance is A1, then the data analysis module 16 directly selects a protocol analysis program corresponding to A1 from a plurality of protocol analysis programs to analyze the data packet from the new household appliance. Alternatively, the protocol type determination module 13 determines the protocol attributes of the new household appliance, for example, when the protocol type determination module 13 determines at least one of the type, manufacturer, model, serial number and ID number of the new household appliance, the data analysis module 16 directly selects a protocol analysis program corresponding to the protocol attribute from a plurality of protocol analysis programs to analyze the data packet of the new household appliance. Namely, as long as any one or more of the type, manufacturer, model, serial number and ID number of the new household appliance is determined, a corresponding protocol analysis program can be selected to analyze the data packet of the new household appliance.

In summary, the communication method for a smart home controller according to the present invention establishes a network connection with household appliances through a smart home controller; the smart home controller receives a data packet sent by a household appliance; the smart home controller determines the protocol type of the communication protocol supported by the household appliance through the protocol identifier; the smart home controller selects, based on the determination result, a protocol analysis program corresponding to the protocol type of the communication protocol from a plurality of protocol analysis programs, and uses the protocol analysis program to analyze the data packet. By determining the protocol type of the communication protocol supported by a household appliance, selecting a protocol analysis program corresponding to the protocol type of the communication protocol based on the protocol type, and performing protocol analysis on a data packet of the household appliance, the present invention can achieve data transmission between the smart home controller and household appliances, and effectively improve the user experience.

Only examples of the present invention are described above, and the scope of the present invention is not limited thereby. Any equivalent structure or equivalent flow change based on the Specification and Drawings of the present invention, or direct or indirect applications in other related technical fields, shall all be encompassed by the present invention.

## Claims

1. A communication method for a smart home controller, wherein the method comprises:
- the smart home controller acquires at least one communication protocol supported by household appliances;
- the smart home controller determines at least one protocol type of the communication protocols supported by household appliances;
- the smart home controller saves a protocol analysis program of the communication protocols corresponding to the at least one protocol type in a parallel way, such that the smart home controller can be compatible with a variety of communication protocols supported by a plurality of household appliances;
- the smart home controller establishes a network connection with household appliances;
- the smart home controller receives a data packet sent by the household appliance, wherein the data packet comprises a protocol identifier of the communication protocol supported by household appliance;
- the smart home controller determines the protocol type of the communication protocol supported by the household appliance through the protocol identifier;
- the smart home controller selects, based on the determination result, a protocol analysis program corresponding to the protocol type of the communication protocol from a plurality of protocol analysis programs, and uses the protocol analysis program to analyze the data packet, thereby achieving data transmission with the household appliance;
- wherein, the smart home controller routinely detects if the cloud server comprises a new communication protocol supported by the household appliance; if it does, the smart home controller downloads and installs a new version of the application that comprises the new communication protocol, such that the smart home controller can be compatible with a variety of communication protocols supported by a plurality of household appliances.

2. The communication method according to Claim 1, wherein the data packet further comprises a protocol format of the communication protocol supported by household appliance and the data byte size of the data packet.

3. The communication method according to Claim 1, wherein the "smart home controller determines the protocol type of the communication protocol supported by the household appliance through the protocol identifier" comprises:
- the smart home controller searches the protocol identifier of the communication protocol supported by the household appliance from the data packet;
- the smart home controller analyzes the protocol identifier of the communication protocol supported by the household appliance;
- the smart home controller determines the protocol type of the communication protocol supported by the household appliance according to the analysis result.

4. The communication method according to Claim 1, wherein the "smart home controller selects, based on the determination result, a protocol analysis program corresponding to the protocol type of the communication protocol from a plurality of protocol analysis programs, and uses the protocol analysis program to analyze the data packet" comprises:
- the smart home controller determines if it supports the protocol type of the communication protocol supported by the household appliance;
- if it does not, the smart home controller acquires relevant information about the communication protocol supported by the household appliance, wherein the relevant information about the communication protocol comprises protocol format or protocol identifier;
- the smart home controller sends the relevant information to a cloud server such that the cloud server acquires the communication protocol supported by the household appliance and forms a new version of the application;
- the smart home controller downloads from the cloud server and installs the new version of the application that comprises the communication protocol supported by the household appliance;
- the smart home controller selects a protocol analysis program corresponding to the protocol type of the communication protocol from a plurality of protocol analysis programs of the new version of the application, and uses the protocol analysis program to analyze the data packet.

5. A communication method for a smart home controller, wherein the method comprises:
- the smart home controller establishes a network connection with household appliances;
- the smart home controller receives a data packet sent by the household appliance, wherein the data packet comprises a protocol identifier of the communication protocol supported by household appliance;
- the smart home controller determines the protocol type of the communication protocol supported by the household appliance through the protocol identifier;
- the smart home controller selects, based on the determination result, a protocol analysis program corresponding to the protocol type of the communication protocol from a plurality of protocol analysis programs, and uses the protocol analysis program to analyze the data packet, thereby achieving data transmission with the household appliance.

6. The communication method according to Claim 5, wherein the method further comprises:
- the smart home controller routinely detects if the cloud server comprises a new communication protocol supported by the household appliance; if it does, the smart home controller downloads and installs a new version of the application that comprises the new communication protocol, such that the smart home controller can be compatible with a variety of communication protocols supported by a plurality of household appliances.

7. The communication method according to Claim 5, wherein prior to that the smart home controller establishes a network connection with household appliances, the method further comprises:
- the smart home controller acquires at least one communication protocol supported by household appliances;
- the smart home controller determines at least one protocol type of the communication protocols supported by household appliances;
- the smart home controller saves a protocol analysis program of the communication protocols corresponding to the at least one protocol type in a parallel way, such that the smart home controller can be compatible with a variety of communication protocols supported by a plurality of household appliances.

8. The communication method according to Claim 5, wherein the "smart home controller determines the protocol type of the communication protocol supported by the household appliance through the protocol identifier" comprises:
- the smart home controller searches the protocol identifier of the communication protocol supported by the household appliance from the data packet;
- the smart home controller analyzes the protocol identifier of the communication protocol supported by the household appliance;
- the smart home controller determines the protocol type of the communication protocol supported by the household appliance according to the analysis result.

9. The communication method according to Claim 5, wherein the "smart home controller selects, based on the determination result, a protocol analysis program corresponding to the protocol type of the communication protocol from a plurality of protocol analysis programs, and uses the protocol analysis program to analyze the data packet" comprises:
- the smart home controller determines if it supports the protocol type of the communication protocol supported by the household appliance;
- if it does not, the smart home controller acquires relevant information about the communication protocol supported by the household appliance, wherein the relevant information about the communication protocol comprises protocol format or protocol identifier;
- the smart home controller sends the relevant information to a cloud server such that the cloud server acquires the communication protocol supported by the household appliance and forms a new version of the application;
- the smart home controller downloads from the cloud server and installs the new version of the application that comprises the communication protocol supported by the household appliance;
- the smart home controller selects a protocol analysis program corresponding to the protocol type of the communication protocol from a plurality of protocol analysis programs of the new version of the application, and uses the protocol analysis program to analyze the data packet.

10. A smart home controller, wherein the smart home controller comprises:
- a network connection module configured to establish a network connection with household appliances;
- a data receiving module connected with the network connection module and configured to receive a data packet sent by the household appliance, wherein the data packet comprises a protocol identifier of the communication protocol supported by household appliance;
- a protocol type determination module connected with the data receiving module and configured to determine the protocol type of the communication protocol supported by the household appliance through the protocol identifier;
- a data analysis module connected with the protocol type determination module and configured to select, based on the determination result, a protocol analysis program corresponding to the protocol type of the communication protocol from a plurality of protocol analysis programs, and use the protocol analysis program to analyze the data packet, thereby achieving data transmission with the household appliance.

11. The smart home controller according to Claim 10, wherein the smart home controller further comprises a protocol updating module, the protocol updating module being configured to routinely detect if the cloud server comprises a new communication protocol supported by the household appliance, and if it is detected that the cloud server comprises a new communication protocol supported by the household appliance, the data analysis module downloads and installs a new version of the application that comprises the new communication protocol, such that the smart home controller can be compatible with a variety of communication protocols supported by a plurality of household appliances.

12. The smart home controller according to Claim 10, wherein the smart home controller further comprises a protocol acquiring module, wherein
- the protocol acquiring module is configured to acquire at least one communication protocol supported by household appliances;
- the protocol type determination module is connected with the protocol acquiring module, and configured to determine at least one protocol type of the communication protocols supported by household appliances;
- the data analysis module is configured to save a protocol analysis program of the communication protocols corresponding to the at least one protocol type in a parallel way, such that the smart home controller can be compatible with a variety of communication protocols supported by a plurality of household appliances.

13. The smart home controller according to Claim 10, wherein the protocol type determination module comprises:
- a searching unit configured to search the protocol identifier of the communication protocol supported by the household appliance from the data packet;
- an analysis unit connected with the searching unit and configured to analyze the protocol identifier of the communication protocol supported by the household appliance;
- a protocol determination unit connected with the analysis unit and configured to determine the protocol type of the communication protocol supported by the household appliance according to the analysis result.

14. The smart home controller according to Claim 10, wherein the data analysis module comprises:
- a protocol support unit configured to determine if it supports the protocol type of the communication protocol supported by the household appliance;
- a protocol information acquiring unit connected with the protocol support unit and configured to acquire relevant information about the communication protocol supported by the household appliance if the protocol support unit determines that it does not support the protocol type of the communication protocol supported by the household appliance, wherein the relevant information about the communication protocol comprises protocol format or protocol identifier;
- a sending unit connected with the protocol information acquiring unit and configured to send the relevant information to a cloud server such that the cloud server acquires the communication protocol supported by the household appliance and forms a new version of the application;
- a receiving unit configured to download from the cloud server and install the new version of the application that comprises the communication protocol supported by the household appliance;
- an analysis unit connected with the receiving unit and configured to select a protocol analysis program corresponding to the protocol type of the communication protocol from a plurality of protocol analysis programs of the new version of the application, and use the protocol analysis program to analyze the data packet.
